# EUROPÄISCHE PATENTSCHRIFT

(11) **EP 3 898 295 B1**
(45) Veröffentlichungstag und Bekanntmachung des Hinweises auf die Patenterteilung: **26.11.2025**
(21) Anmeldenummer: 19817267.8
(22) Anmeldetag: 06.12.2019
(51) Int. Cl.: B60D 1/64, B60R 16/03, G08C 15/06, H01R 13/66, B60D 1/62, H01R 31/08

(54) **STECKVERBINDERVORRICHTUNG FÜR EIN FAHRZEUG ZUM ÜBERTRAGEN VON DATEN ZWISCHEN GEKUPPELTEN FAHRZEUGEN SOWIE SYSTEM UND FAHRZEUG DAMIT**
PLUG-IN CONNECTOR APPARATUS FOR A VEHICLE FOR TRANSMITTING DATA BETWEEN COUPLED VEHICLES, AND SYSTEM AND VEHICLE COMPRISING SAID PLUG-IN CONNECTOR APPARATUS
DISPOSITIF CONNECTEUR À ENFICHAGE POUR UN VÉHICULE POUR LA TRANSMISSION DE DONNÉES ENTRE DES VÉHICULES ATTELÉS AINSI QUE SYSTÈME ET VÉHICULE LE COMPRENANT

(30) Priorität: 19.12.2018 DE 102018132867
(43) Veröffentlichungstag der Anmeldung: 27.10.2021
(73) Patentinhaber: ZF CV Systems Europe BV, 1170 Brussels (BE)
(72) Erfinder: GLAVINIC, Andelko, 31157 Sarstedt (DE); GOERS, Andreas, 30982 Pattensen (DE)
(74) Vertreter: Rabe, Dirk-Heinrich
(86) Internationale Anmeldenummer: PCT/EP2019/084016
(87) Internationale Veröffentlichungsnummer: WO 2020/126556

(56) Entgegenhaltungen:
- EP-A1- 0 546 370
- EP-A1- 1 702 802
- WO-A1-2013/043661
- WO-A1-2018/104929
- WO-A1-93/26062
- WO-A2-2018/069326
- DE-A1- 10 161 709
- DE-A1- 102015 206 047
- GB-A- 2 383 476
- US-A- 5 739 592
- US-A1- 2006 085 099
- US-A1- 2007 241 868
- US-A1- 2012 064 739
- US-A1- 2017 187 472
- US-B1- 6 483 200
- PETER HANK ET AL: "Automotive Ethernet: In-vehicle networking and smart mobility", DESIGN, AUTOMATION&TEST IN EUROPE CONFERENCE&EXHIBITION (DATE), 2013, IEEE, 18 March 2013 (2013-03-18), pages 1735 - 1739, XP032396000, ISBN: 978-1-4673-5071-6, DOI: 10.7873/DATE.2013.349

## Beschreibung

Die Erfindung betrifft den Bereich der Fahrzeuge, insbesondere der Nutzfahrzeuge, und hierbei die Übertragung von Daten und elektrischen Signalen zwischen einem als Zugfahrzeug ausgebildeten Fahrzeug und einem von dem Zugfahrzeug gezogenen als Fahrzeuganhänger ausgebildeten Fahrzeug.

Im Bereich der Fahrzeuge und im Speziellen der Nutzfahrzeuge, nämlich Zugfahrzeugen und Fahrzeuganhängern, ist es bekannt, Daten und Signale über zwei genormte elektrische Verbindungen zwischen Zugfahrzeug und Fahrzeuganhänger auszutauschen. Hierzu ist eine erste elektrische Verbindung zwischen dem Zugfahrzeug und dem Fahrzeuganhänger nach dem ISO 7638 Standard vorgesehen, der ausschließlich für eine Brems- und Fahrwerkssteuerung verwendet wird. Außerdem besteht eine zweite elektrische Verbindung zwischen einem Zugfahrzeug und einem von dem Zugfahrzeug gezogenen Fahrzeuganhänger nach dem ISO 12098 Standard. Die zweite elektrische Verbindung dient der Lichtsteuerung und allen anderen Steuerungen außer Bremsen und Fahrwerkssteuerungen.

Zugfahrzeug und Fahrzeuganhänger weisen für die elektrischen Verbindungen jeweils ein Verbindungselement auf, das üblicherweise als Steckdose ausgebildet ist. Die Verbindungselemente eines Zugfahrzeugs und eines von dem Zugfahrzeug gezogenen Fahrzeuganhängers werden dann über eine Verbindungsleitung mit zwei Verbindungselementen, die üblicherweise als Steckverbinder oder Stecker ausgebildet sind, verbunden. Die Verbindungsleitung ist üblicherweise als Spiralkabel ausgebildet. Vorzugsweise werden also die Stecker des Spiralkabels jeweils in eine Steckdose des Zugfahrzeugs und eine Steckdose als Fahrzeuganhänger eingesteckt.

Zunehmend wächst der Wunsch zusätzlich zu diesen genormten elektrischen Verbindungen zwischen Zugfahrzeug und Fahrzeuganhänger eine weitere Verbindung zum Übertragen von Datensignalen mit hoher Bandbreite bereitzustellen. Diese Bandbreite wird beispielsweise benötigt, um Echtzeitdaten beispielsweise von Sensoren oder Kameras zwischen Zugfahrzeug und Fahrzeuganhänger zu übertragen. Als Beispiel sei auf Daten einer Kamera am Ende des Fahrzeuganhängers hingewiesen, die beispielsweise in Echtzeit an ein Zugfahrzeug übertragen werden sollen, um den Fahrer bei der Rückwärtsfahrt zu unterstützen. Weiter könnten auch Lidar- oder Radardaten, die mit Sensoren im Fahrzeuganhänger aufgenommen werden, vorteilhaft zum Steuern eines Gespanns von einem Bediener, der auch Fahrzeugführer des Zugfahrzeugs genannt werden kann, berücksichtigt werden, wenn diese an das Zugfahrzeug übertragen werden. Allgemein besteht demnach der Wunsch, Daten für Fahrerassistenzsysteme, die auch Advanced Driver Assistance Systems (ADAS) genannt werden, und auch autonomes Fahren, das auch Automated Driving (AD) genannt wird, mit hohen Datenraten zwischen Fahrzeuganhänger und Fahrzeug zu übertragen.

Die Lösung, solche Daten mit hoher Datenrate zwischen Zugfahrzeug und einem Fahrzeuganhänger zu übertragen, ist es, eine weitere zusätzliche elektrische Verbindung zwischen Zugfahrzeug und Fahrzeuganhänger herzustellen. Dies ist auch bereits versucht worden, wobei diese Lösung sich als unpraktikabel erwiesen hat. Durch eine zusätzliche dritte elektrische Verbindung zwischen Zugfahrzeug und Fahrzeuganhänger wird nämlich der Aufwand beim An- und Abkuppeln der Fahrzeuganhänger weiter erhöht. Zusätzlich muss ein zusätzliches Spiralkabel im ungekuppelten Zustand des Zugfahrzeugs im Zugfahrzeug mitgeführt werden, um eine solche weitere elektrische Verbindung jederzeit herstellen zu können.

Daher wurde nach weiteren Lösungen gesucht, um die Daten beispielsweise über Drahtlosverbindungen zwischen Zugfahrzeug und Fahrzeuganhänger auszutauschen. Auch diese Lösung konnte sich nicht etablieren, da insbesondere, wenn es sich um sicherheitsrelevante Daten zur Übertragung handelt, das Vertrauen an Drahtlosverbindungen meist unzureichend ist. Dies gilt insbesondere, wenn die Drahtlosverbindung für autonomes Fahren eingesetzt wird.

US 2007/0241868 A1 offenbart eine Anordnung zum Nachrüsten eines Zugfahrzeug-Fahrzeuganhänger-Kommunikationssystems. Gleichspannung wird zwischen einem Zugfahrzeug-Anschluss und einem Fahrzeuganhänger-Anschluss übertragen, der ein SAE-J560-Siebenwegeanschluss ist. Über eine ECU-Strom-und-Datenleitung werden weiterhin Daten zwischen dem Zugfahrzeug und dem Fahrzeuganhänger übertragen.

US 5,739,592, EP 0 546 370 A1 und US 2006/0085099 A1 offenbaren Systeme zum Bereitstellen einer elektrischen Strom- und Datenverbindung zwischen einem Zugfahrzeug und einem Fahrzeuganhänger.

Aufgabe der vorliegenden Erfindung ist es daher, eine Möglichkeit zur Datenübertragung zwischen Fahrzeugen, insbesondere einem Zugfahrzeug und einem Fahrzeuganhänger, zu schaffen, die eine ausreichend hohe Datenrate bereitstellt, kabelgebunden ist und einen geringen Aufwand bei An- und Abkuppeln voraussetzt.

Hierzu betrifft die Erfindung eine Steckverbindervorrichtung für ein Fahrzeug, insbesondere ein Zugfahrzeug oder einen Fahrzeuganhänger zum Übertragen von Daten zwischen dem Fahrzeug und einem mit dem Fahrzeug gekoppelten Fahrzeug. Die Steckverbindervorrichtung umfasst eine erste Schnittstelle zum Verbinden mit einem Fahrzeug und eine zweite Schnittstelle zum Verbinden mit einer Verbindungsleitung. Die erste Schnittstelle oder die zweite Schnittstelle oder die erste Schnittstelle und die zweite Schnittstelle sind als Verbindungselemente zum Herstellen einer Verbindung nach einem ISO (Internationale Organisation für Normung) oder einem SAE (Society of Automotive Engineers) Standard, besonders bevorzugt nach ISO 7638 oder ISO 12098, ausgebildet. Ein Verbindungselement bezeichnet hier ein Verbindungselement zum Herstellen einer Steckverbindung und entspricht somit entweder einem Stecker oder einer Steckdose.

Weiterhin umfasst die Steckverbindervorrichtung eine Datenschnittstelle zum Verbinden mit einer Datenleitung des Fahrzeugs. Weiter ist die Steckverbindervorrichtung eingerichtet, über die Datenschnittstelle empfangene Daten oder elektrische Signale mit der zweiten Schnittstelle auszugeben oder über die zweite Schnittstelle empfangene Daten oder elektrische Signale an der Datenschnittstelle auszugeben und über die erste Schnittstelle empfangene elektrische Signale und/oder Daten ebenfalls an der zweiten Datenschnittstelle auszugeben. Hierzu ist die zweite Schnittstelle einerseits mit der ersten Schnittstelle und andererseits mit der Datenschnittstelle elektrisch verbunden. Elektrisch verbunden umfasst hier auch eine nicht unmittelbare, sondern auch über Bauteile der Elektrotechnik hergestellte Verbindung.

Die Steckverbindervorrichtung ist also beispielsweise so ausgebildet, dass die erste Schnittstelle als Verbindungselement, zum Beispiel als Stecker, nach einem ISO oder SAE Standard, beispielsweise nach ISO 7638 oder ISO 12098, ausgebildet ist. Die erste Schnittstelle, also der Stecker, ist dann beispielsweise in eine an einem Fahrzeug vorhandene nach ISO oder SAE Standard, insbesondere nach ISO 7638 oder ISO 12098, genormte Steckdose einsteckbar und stellt dann eine Datenschnittstelle sowie die zweite Schnittstelle bereit. Die zweite Schnittstelle kann dann als individuelle Schnittstelle mit einer beliebigen Anzahl an elektrischen Leitungen ausgebildet sein und überträgt einerseits die Daten oder Signale von der ersten Schnittstelle und andererseits Daten und Signale, die über die Datenschnittstelle zusätzlich bereitgestellt werden. Die Datenschnittstelle stellt hierbei eine Schnittstelle zum Verbinden eines Moduls oder Steuergeräts, das Daten mit einer hohen Datenübertragungsrate aussenden oder empfangen kann, dar. Ordnet man eine zweite Steckverbindervorrichtung in einer nach ISO oder SAE Standard, insbesondere nach ISO 7638 oder ISO 12098, genormten Kupplung eines weiteren Fahrzeugs an, so können die beiden Fahrzeuge, wobei eines als Zugfahrzeug und das andere als Fahrzeuganhänger ausgebildet ist, über ihre zweiten Schnittstellen, die über eine einzige Verbindungsleitung verbunden sind, weiterhin die nach dem ISO oder SAE Standard, insbesondere nach dem ISO 7638 oder ISO 12098 Standard, vorgeschriebenen Signale und zusätzlich Daten austauschen. Hierzu ist die Steckverbindervorrichtung vorzugsweise nach Art eines Adapters ausgebildet, der, falls keine Datenübertragung mit einer hohen Datengeschwindigkeit gewünscht ist, einfach aus dem Verbindungselement am Fahrzeug entfernt werden kann.

Eine elektrische Verbindung nach ISO oder SAE Standard, insbesondere nach ISO 7638 oder ISO 12098, wird somit erweitert, um einerseits die standardisierte Verbindung herzustellen, und andererseits Daten mit einer hohen Datenübertragungsrate über dieselbe elektrische Verbindung zu übertragen. Hierfür ist lediglich ein angepasstes Kabel zum Verbinden der zweiten Schnittstellen zweier Steckverbindervorrichtungen nötig. Es kann demnach zur Datenübertragung mit hohen Datenraten auf eine zusätzliche elektrische Verbindung sowie auf eine Drahtlosverbindung verzichtet werden.

Weiterhin kann gemäß dem obigen Beispiel im Falle, dass eines der beiden Fahrzeuge keine Übertragung von Daten mit einer schnellen Datenrate unterstützt, die Steckverbindervorrichtung einfach aus der standardisierten Steckdose des Fahrzeugs, das eine schnelle Datenübertragung unterstützt, entfernt werden und eine gewöhnliche standardisierte Verbindung hergestellt werden. Somit ist eine Kompatibilität auch mit Fahrzeugen weiterhin gewährleistet, die keine schnelle Datenverbindung unterstützen. Es wurde erkannt, dass gerade diese weiterhin unterstützte Kompatibilität überhaupt ermöglicht, die ISO genormten Verbindungen zu erweitern.

Die erste Schnittstelle umfasst mehrere erste Kontakte, die zweite Schnittstelle umfasst mehrere zweite Kontakte und die Datenschnittstelle umfasst mehrere dritte Kontakte. Die Steckverbindervorrichtung umfasst außerdem mindestens ein Verzweigungselement. Das Verzweigungselement umfasst einen Verbindungspunkt, mindestens zwei Filterelemente und vorzugsweise eine weitere Filtereinrichtung. Mit dem ersten Verbindungspunkt des Verzweigungselements ist einer der ersten Kontakte elektrisch verbunden und weiterhin sind zwei der zweiten Kontakte jeweils über eines der Filterelemente mit dem Verbindungspunkt elektrisch verbunden. Außerdem sind zwei der dritten Kontakte jeweils mit einem der zwei zweiten Kontakte, vorzugsweise über eine weitere Filtereinrichtung, verbunden.

Durch die Filterelemente und vorzugsweise die weitere Filtereinrichtung wird ermöglicht, dass nur Daten und Signale, die über die mit dem Verzweigungselement verbundenen zweiten Kontakte der zweiten Schnittstelle empfangen werden, an der ersten Schnittstelle oder der Datenschnittstelle ausgegeben werden, die für die entsprechende Schnittstelle übertragen werden. Die Datenschnittstelle kann somit über die beiden zweiten Kontakte empfangene Daten direkt zur weiteren Verarbeitung ausgeben, wobei für die erste Schnittstelle bestimmte Signale durch die weitere Filtereinrichtung unterdrückt werden. Gleichzeitig werden die über die zweiten Kontakte gesendeten elektrischen Signale über die Filterelemente gefiltert und dann einem der ersten Kontakte der ersten Schnittstelle zugeführt. Die Filter sind vorzugsweise so ausgebildet, um den Teil der elektrischen Signale, der den Daten, die an der Datenschnittstelle ausgegeben werden sollen, entspricht, herauszufiltern. Die Filterelemente sind beispielsweise als Tiefpassfilter und die weitere Filtereinrichtung als Hochpassfilter ausgebildet.

Somit kann an der ersten Schnittstelle ein Signal frei von den Anteilen der elektrischen Signale, die für die Datenübertragung genutzt werden, ausgegeben werden. Ist beispielsweise das über die zwei Kontakte der zweiten Schnittstelle empfangene Signal ein Blinkersignal, auf das Daten aufmoduliert sind, so werden diese Datenanteile herausgefiltert, um dann am ersten Kontakt der ersten Schnittstelle ein Signal auszugeben, das frei von den aufmodulierten Datensignalanteilen ist. Wenn also hierdurch gemäß diesem Beispiel ein Blinker angesteuert wird, wird so ein Flackern des Blinkers vermieden. Zusätzlich wird gemäß dieser Ausführungsform ein Signal der ersten Schnittstelle also über das Verzweigungselement auf zwei Leitungen aufgeteilt und über die zwei Kontakte der zweiten Schnittstelle ausgegeben. Diese zwei Leitungen können dann zusätzlich zur Datenübertragung verwendet werden, um beispielsweise über die Datenschnittstelle und diese zwei Leitungen Daten mit einer hohen Datenübertragungsrate zu übertragen. Dies ist beispielsweise möglich, da ein geeigneter Leitungskode, zum Beispiel gemäß Manchester-Code, so übertragbar ist. Werden somit zwei Steckverbindervorrichtungen jeweils an einem von zwei aneinandergekuppelten Fahrzeugen eingesetzt, so kann das über die erste Schnittstelle der einen Steckverbindervorrichtung vom Fahrzeug ausgesendete Signal zunächst über das Verzweigungselement gesplittet und nach Übertragung über die zweite Steckverbindervorrichtung mittels dessen Verzweigungselements wieder zusammengeführt werden, um dann an einer ersten Schnittstelle der zweiten Steckverbindervorrichtung ausgegeben zu werden. Hierdurch ist es zusätzlich möglich, einerseits die zweiten Kontakte der zweiten Schnittstelle, aber auch die Übertragungsleitungen, die mit der zweiten Schnittstelle verbunden werden, mit einem vergleichsweise geringeren Querschnitt auszustatten, als es zur Übertragung eines elektrischen Signals nach ISO oder SAE Standard, insbesondere nach ISO 7638 oder ISO 12098, vorgesehen ist. Das über den ersten Kontakt der ersten Schnittstelle ausgesendete und empfangene Signal wird nämlich parallel auf zwei Leitungen, die mit der bzw. den zweiten Schnittstellen der zwei Steckverbindervorrichtungen verbundenen Leitungen übertragen, sodass sich der vorgeschriebene Querschnitt aus diesen beiden Leitungen zusammensetzt.

Gemäß einer weiteren Ausführungsform umfasst das Steckverbinderelement mindestens zwei Verzweigungselemente. Hierdurch sind dann auch mindestens zwei erste Kontakte jeweils mit zwei zweiten Kontakten verbunden, die dann ebenfalls auch dritte Kontakte der Datenschnittstelle bereitstellen. So können Daten beispielsweise redundant übertragen werden oder es kann eine Datenrate noch weiter erhöht werden. Die Datensicherheit und/oder Datenübertragungsgeschwindigkeit wird somit verbessert.

Gemäß einer weiteren Ausführungsform ist die erste Schnittstelle als Verbindungselement zum Herstellen einer Steckverbindung nach einem ISO oder SAE Standard, insbesondere nach ISO 7638 oder ISO 12098, ausgebildet. Das Verbindungselement ist vorzugsweise ein genormter ISO oder SAE Stecker, zum Beispiel ein ISO 7638 oder ISO 12098 Stecker, der eingerichtet ist, in eine an einem Fahrzeug vorhandene genormte ISO oder SAE Steckdose, zum Beispiel eine ISO 7638 oder ISO 12098 Steckdose, eingesteckt zu werden. Die Steckverbindervorrichtung ist somit nach Art eines Adapters ausgebildet, der in das Fahrzeug, nämlich die gemäß dem Standard vorhandene Steckdose, eingesteckt werden kann. Vorzugsweise ist die zweite Schnittstelle als proprietäres Verbindungselement ausgebildet. Ein proprietäres Verbindungselement bezeichnet hier einen Stecker oder eine Steckdose, die nicht nach ISO oder SAE Standards normiert sein muss. Diese Ausbildung als eine Art Adapter ermöglicht somit die Datenübertragung sowie auch die Übertragung gemäß Standards, wie etwa ISO 7638 und ISO 12098, wenn die aneinandergekoppelten Fahrzeuge, nämlich beispielsweise Zugfahrzeug und Fahrzeuganhänger eine Datenübertragung bereitstellen. Dies ist der Fall, wenn beispielsweise ein Anhängerfahrzeug mit einer Rückfahrkamera ausgestattet ist, die Daten an das Zugfahrzeug zur Darstellung oder Auswertung senden kann. Ist eines der beiden Fahrzeuge nicht ausgebildet, um derartige Daten zu übertragen, sei es einerseits, dass der Fahrzeuganhänger keine Daten zur Übertragung oder andererseits das Zugfahrzeug keine Einrichtung zur Auswertung der Daten bereitstellt, so kann die Steckverbindervorrichtung einfach aus der standardisierten Steckdose entfernt werden, sodass ein gewöhnliches Verbindungskabel, zum Beispiel ein Spiralkabel, nach einem Standard, etwa dem ISO 7638 oder ISO 12098 Standard, die entsprechend vorgeschriebenen Signale übertragen kann. Eine Kompatibilität mit Fahrzeugen ohne Ausstattung zur schnellen Datenübertragung ist somit einerseits möglich, wobei andererseits eine schnelle Datenübertragung durch Einstecken oder Verbinden eines einzelnen Steckers möglich ist, wenn beide Fahrzeuge, die miteinander gekoppelt werden, diese Funktionalität bereitstellen.

Die ersten Kontakte der ersten Schnittstelle sind als Lötkontakte zum festen Verbinden mit elektrischen Leitungen eines Fahrzeugs, insbesondere mit den Kontakten eines Kabels eines Fahrzeugs, das die Leitungen umfasst, ausgebildet. Die zweite Schnittstelle ist dann als Verbindungselement, also als Stecker oder Steckdose, zum Herstellen einer Verbindung nach ISO oder SAE Standard, vorzugsweise ISO 7638 oder ISO 12098, ausgebildet. In diesem Fall wird die Steckverbindervorrichtung alternativ zur vorherigen Ausführungsform nicht nach Art eines Adapters bereitgestellt, sondern ersetzt das vorhandene Verbindungselement am Fahrzeug, also die Steckdose, nach ISO oder SAE Standard, vorzugsweise ISO 7638 oder ISO 12098. Diese ist somit zur Anwendung fest mit einem Fahrzeug über die Lötkontakte verbindbar. Dennoch ist die zweite Schnittstelle als Verbindungselement zum Herstellen einer Verbindung nach ISO oder SAE Standard, vorzugsweise ISO 7638 oder ISO 12098, ausgebildet, um weiterhin eine Rückwärtskompatibilität zu Fahrzeugen ohne Funktion zur schnellen Datenübertragung über ein gewöhnliches Spiralkabel nach ISO oder SAE Standard, vorzugsweise ISO 7638 oder ISO 12098, zu gewährleisten.

Die zweite Schnittstelle weist mindestens einen zweiten Kontakt auf, der im Verbindungselement nach ISO oder SAE Standard, vorzugsweise ISO 7638 oder ISO 12098, eine Position aufweist, die unterschiedlich zu den Positionen der Kontakte ist, die nach ISO oder SAE Standard, vorzugsweise ISO 7638 oder ISO 12098, vorgeschrieben sind. Hierbei ist der weitere zweite Kontakt so angeordnet, dass die nach ISO oder SAE Standard, vorzugsweise ISO 7638 oder ISO 12098, vorgeschriebenen Kontakte durch den mindestens einen weiteren zweiten Kontakt unbeeinflusst bleiben. Somit ist es einerseits möglich, die zweite Schnittstelle mit einem Stecker eines standardisierten, insbesondere nach ISO 7638 oder ISO 12098, Spiralkabels zu verbinden, wobei andererseits ein Spezialkabel verwendet werden kann, um zusätzlich über den weiteren Kontakt und mindestens einen der nach ISO oder SAE genormten Kontakte Daten zu übertragen. Eine einfache Realisierung zur schnellen Datenübertragung bei weiterhin gewährleisteter Rückwärtskompatibilität ist somit möglich.

Die zweiten Kontakte der zweiten Schnittstelle sind als Kontaktflächen in Kontaktbuchsen oder als Kontaktstifte ausgebildet. Mindestens eine der Kontaktbuchsen oder mindestens einer der Kontaktstifte weist zwei elektrisch getrennte Kontaktflächen auf, wobei jede der Kontaktflächen einen der zweiten Kontakte bildet. Demnach ist ein standardisiertes, vorzugsweise nach ISO 7638 oder ISO 12098, Verbindungselement, insbesondere als Steckdose, mit der zweiten Schnittstelle bereitstellbar, in das einerseits gewöhnliche standardisierte, vorzugsweise nach ISO 7638 oder ISO 12098, Verbindungselemente, vorzugsweise Stecker, eingesteckt werden können, um die standardisierten Funktionen bereitzustellen. Hierbei werden die zwei elektrisch getrennten Kontaktflächen in der mindestens einen Kontaktbuchse durch einen standardisierten Kontaktstift eines standardisierten, vorzugsweise nach ISO 7638 oder ISO 12098, Steckers einfach überbrückt, sodass keine Datenübertragung möglich ist. Ein speziell angepasstes Kabel jedoch, das auch einen Kontaktstift mit zwei elektrisch getrennten Kontaktflächen aufweist, kann jedoch verwendet werden, um eine zusätzliche elektrische Leitung bereitzustellen, um so Daten mit hoher Datenrate zu übertragen. Eine Datenübertragung, falls diese gewünscht ist, kann also mit einer so ausgebildeten Steckverbindervorrichtung ausgeführt werden, wobei diese auch kompatibel für die Benutzung mit den bekannten standardisierten Spiralkabeln bleibt, ohne dann die Funktion zur Datenübertragung bereitzustellen.

Gemäß einer weiteren Ausführungsform sind die dritten Kontakte als Lötkontakte zum festen Verbinden elektrischer Leitungen, nämlich mit Kontakten der Leitungen, die in einem Kabel eines Fahrzeugs zusammengefasst sind, ausgebildet. Eine sichere Datenanbindung an die Steckverbindervorrichtung wird somit gewährleistet.

Weiterhin betrifft die Erfindung eine Steckverbindervorrichtung, die ein Verbindungselement, nämlich einen Stecker oder eine Steckdose, umfasst. Das Verbindungselement umfasst weiter mehrere Kontaktbuchsen, insbesondere, wenn es als Steckdose ausgebildet ist, und/oder mehrere Kontaktstifte, insbesondere, wenn es als Stecker ausgebildet ist. Es ist also gemäß einer speziellen Ausführungsform auch möglich, dass das Verbindungselement mehrere Kontaktbuchsen und mehrere Kontaktstifte gemeinsam aufweist.

Die Kontaktbuchsen sind hierbei so ausgebildet, dass diese jeweils einen Aufnahmebereich zur Aufnahme eines Kontaktstifts aufweisen, wobei mindestens eine der Kontaktbuchsen mindestens zwei elektrisch getrennte Kontaktflächen aufweist. Die mehreren Kontaktstifte sind so ausgebildet, dass diese jeweils einen Einfügebereich zum Einfügen in einen Aufnahmebereich einer Kontaktbuchse aufweisen. Außerdem ist mindestens einer der Kontaktstifte so ausgebildet, dass dieser mindestens zwei elektrisch getrennte Kontaktflächen aufweist.

Durch Teilen der Kontaktflächen einer Kontaktbuchse oder eines Kontaktstifts können zwei oder mehr Kontakte bereitgestellt werden, die zusammen mit entsprechend getrennten Kontaktflächen eines komplementären Verbindungselements dienen, um zwei elektrisch getrennte elektrische Verbindungen mittels der Steckverbindervorrichtung herzustellen. Gleichermaßen kann ein komplementäres Verbindungselement mit nur einer Kontaktfläche weiterhin verbunden werden, sodass dann zumindest noch eine einfache elektrische Verbindung hergestellt werden kann. Im zuletzt genannten Fall werden die elektrisch getrennten Kontaktflächen kurzgeschlossen.

Gemäß einer weiteren Ausführungsform weist das Verbindungselement mehrere Kontaktbuchsen auf, wobei der Aufnahmebereich der Kontaktbuchsen zylinderförmig mit einer inneren Mantelfläche ausgebildet ist. Die elektrisch getrennten Kontaktflächen der mindestens einen Kontaktbuchse sind dann durch mindestens zwei in Umfangsrichtung der inneren Mantelfläche nebeneinanderliegende Teilmantelflächen gebildet. Demnach ist die innere Mantelfläche beispielsweise als metallischer Leiter ausgebildet, der zum Bilden von beispielsweise zwei getrennten Kontaktflächen zweimal entlang einer Linie parallel zu einer Zylinderlängsachse der zylinderförmig ausgebildeten Mantelfläche unterbrochen ist. Die beiden elektrisch getrennten Kontaktflächen sind somit jeweils durch nebeneinanderliegende Teilmantelflächen, die gemäß dem zuletzt genannten Beispiel jeweils einer halben Mantelfläche entsprechen, gebildet.

Alternativ oder zusätzlich umfasst das Verbindungselement mehrere Kontaktstifte, wobei der Einfügebereich der Kontaktstifte ebenfalls zylinderförmig mit einer äußeren Mantelfläche ausgebildet ist. Die elektrisch getrennten Kontaktflächen des mindestens einen Kontaktstifts sind dann durch mindestens zwei in Umfangsrichtung der äußeren Mantelfläche nebeneinanderliegende Teilmantelflächen gebildet.

Eine sichere Verbindung ist auch im Betrieb, also unter Spannung, herstellbar und durch das Vorhandensein mehrerer Kontaktbuchsen und Kontaktstifte, deren Anordnung eine Steckerorientierung vorgibt, ist gleichzeitig eine Verpolungssicherheit gegeben, da insbesondere standardisierte Stecker oder vorbereitete Stecker und Buchsen nur in vorgesehenen Orientierungen miteinander verbunden werden können.

Gemäß einer weiteren Ausführungsform der Steckverbindervorrichtung mit einem Verbindungselement, umfassend mehrere Kontaktbuchsen und/oder Kontaktstifte, weist die Steckverbindervorrichtung zusätzlich die Merkmale insbesondere einer der zuvor genannten Ausführungsformen auf.

Weiterhin betrifft die Erfindung eine Verbindungsleitung mit mindestens einem Stecker zum Verbinden mit einer als Verbindungselement ausgebildeten zweiten Schnittstelle einer Steckverbindervorrichtung nach einer der vorgenannten Ausführungsformen. Die Verbindungsleitung umfasst mehrere elektrische Leiter, wobei mindestens ein Paar von elektrischen Leitern verdrillt ist. Somit können standardisierte, insbesondere nach ISO 7638 oder ISO 12098, Signale über die Verbindungsleitung übertragen werden, wobei über die verdrillten Leiter zusätzlich Daten mit einer hohen Datengeschwindigkeit übertragbar sind.

Gemäß einer weiteren Ausführungsform entspricht das Paar von verdrillten Leitungen dem Open Alliance BroadR-Reach (O-ABR) Standard.

Gemäß einer weiteren Ausführungsform weist das Paar von verdrillten Leitern elektrische Leiter, zum Beispiel Kupferlitzen, mit einem geringeren, insbesondere im Wesentlichen halben, Querschnitt als die Leiter der unverdrillten Leitungen auf. Hierbei wird die Kenntnis ausgenutzt, dass über die verdrillten Leitungen Datensignale gesendet werden, die aufgrund ihrer elektrischen Anforderungen lediglich geringere Querschnitte benötigen, wobei, wenn über diese verdrillten Leitungen eine höhere elektrische Energie übertragen werden muss, beispielsweise zur Ansteuerung von Beleuchtung, die verdrillten Leitungen ohnehin parallel geschaltet sind, um die entsprechende Energie zu übertragen. Eine vergleichsweise günstigere Verbindungsleitung durch Einsparen von Leitermaterial ist somit möglich und andererseits ist eine Verdrillung dünnerer Leiter einfacher und somit die Verbindungsleitung einfacher herzustellen.

Gemäß einer weiteren Ausführungsform weist die Verbindungsleitung mindestens ein Verbindungselement zum Herstellen einer Verbindung nach einem ISO oder SAE Standard, insbesondere nach ISO 7638 oder ISO 12098, auf. Das Verbindungselement ist vorzugsweise als Stecker ausgebildet. Außerdem ist jeder elektrische Leiter der Verbindungsleiter mit einem Kontakt verbunden. Das Verbindungselement ist ferner als Stecker ausgebildet, der Kontaktstifte, die auch Pins genannt werden können, aufweist, wobei die elektrischen Leiter des verdrillten Paars von Leitern mit zwei getrennten Kontaktflächen eines einzigen Pins verbunden sind, wobei die übrigen Leiter der Verbindungsleitung jeweils mit einem einzelnen Kontaktstift verbunden sind.

Die Verbindungsleitung ist somit einerseits zur Datenübertragung eingerichtet und dient auch, um mit herkömmlichen standardisierten, zum Beispiel nach ISO 7638 oder ISO 12098, bereitgestellten Verbindungselementen, insbesondere Steckdosen, verbunden zu werden.

Außerdem umfasst die Erfindung ein System mit einer Steckverbindervorrichtung nach einer der vorgenannten Ausführungsformen und einem Steuergerät mit einer Schnittstelle, wobei die Schnittstelle des Steuergeräts mit der Datenschnittstelle der Steckverbindervorrichtung verbunden ist und das Steuergerät vorzugsweise ein Steuergerät einer Sensoreinheit, insbesondere einer Kamera, eines Lidars oder eines Radars, oder eine Auswerteeinheit, insbesondere eine Auswerteeinheit für Sensordaten, vorzugsweise einer Kamera, Lidar- oder Radardaten, ist.

Außerdem betrifft die Erfindung ein Fahrzeug mit dem zuvor genannten System oder zumindest einer Steckverbindervorrichtung nach einer der vorgenannten Ausführungsformen.

Weiterhin betrifft die Erfindung ein Verfahren zum Übertragen von Daten zwischen aneinandergekuppelten Fahrzeugen, insbesondere einem Zugfahrzeug und einem Fahrzeuganhänger. Hierbei werden zunächst Daten an einer Datenschnittstelle einer Steckverbindervorrichtung nach einer der vorgenannten Ausführungsformen bereitgestellt. Daraufhin werden die bereitgestellten Daten an der zweiten Schnittstelle der Steckverbindervorrichtung ausgesendet. Die ausgesendeten Daten werden an einer zweiten Schnittstelle einer weiteren Steckverbindervorrichtung nach einer der vorgenannten Ausführungsformen empfangen und die empfangenen Daten an der Datenschnittstelle der weiteren Steckverbindervorrichtung bereitgestellt.

Weitere Ausführungsformen ergeben sich anhand der in den Figuren näher erläuterten Ausführungsbeispiele. Hierbei zeigen
- Fig. 1: aneinandergekuppelte Fahrzeuge,
- Fig. 2: Verbindungen nach ISO 7638 und ISO 12098 gemäß dem Stand der Technik,
- Figs. 3-6: Ausführungsbeispiele der Steckverbindervorrichtung, die an Fahrzeugen angeordnet sind,
- Fig. 7: ein Verbindungselement gemäß dem Stand der Technik,
- Fig. 8: ein erstes Ausführungsbeispiel eines Verbindungselements gemäß einem Ausführungsbeispiel der Erfindung,
- Fig. 9: ein weiteres Ausführungsbeispiel eines Verbindungselements,
- Fig. 10: ein Teilaufbau zweier miteinander verbundener Steckverbindervorrichtungen und
- Fig. 11: die Schritte eines Ausführungsbeispiels des Verfahrens.

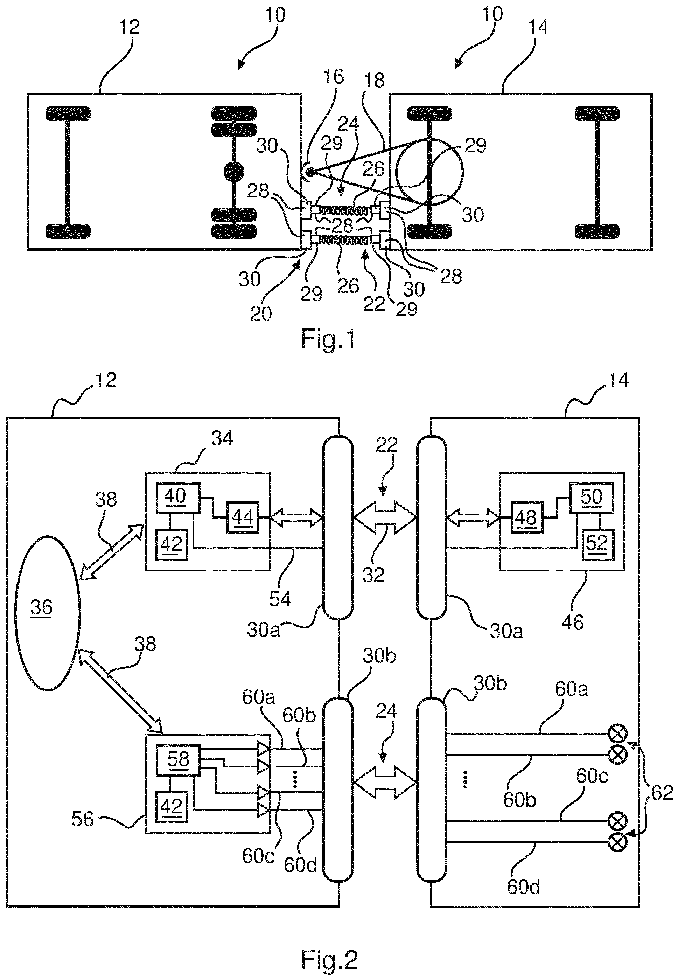

Fig. 1 zeigt zwei aneinandergekuppelte Fahrzeuge 10, nämlich ein Gespann aus zwei Fahrzeugen 10, wobei eines der Fahrzeuge 10 ein Zugfahrzeug 12 ist und das andere Fahrzeug 10 ein Fahrzeuganhänger 14 ist. Die Fahrzeuge 10 sind mittels einer Anhängerkupplung 16 des Zugfahrzeugs 12 und einer Deichsel 18 des Fahrzeuganhängers 14 aneinandergekuppelt. Das Zugfahrzeug 12 weist einen nicht dargestellten Antrieb auf, um sich selbst anzutreiben und so den Fahrzeuganhänger 14 zu ziehen.

Die beiden Fahrzeuge 10 sind außerdem über zwei elektrische Verbindungen 20 miteinander verbunden. Die elektrischen Verbindungen 20 entsprechen einer Verbindung 22 nach ISO 7638 und einer Verbindung 24 nach ISO 12098. Die Verbindung 24 nach ISO 12098 dient zur Übertragung von elektrischen Signalen 81 zur Ansteuerung der Beleuchtung des Fahrzeuganhängers 14 und die Verbindung 22 zum Austausch von Signalen 81 zur Bremssteuerung. Beide elektrischen Verbindungen 22, 24 weisen jeweils eine Verbindungsleitung 26 auf, die an beiden Enden jeweils Verbindungselemente 28 umfasst, die beispielsweise jeweils als Stecker 29 ausgebildet sind. Die Verbindungsleitungen 26 sind beispielsweise als Spiralkabel ausgebildet. Die Verbindungsleitung 26 zum Herstellen der Verbindung 24 weist demnach Verbindungselemente 28 nach ISO 12098 und die Verbindungsleitungsleitung 26 weist zum Herstellen der Verbindung 22 Verbindungselemente 28 nach ISO 7638 auf. Die Verbindungselemente 28 der Spiralkabel 26 sind jeweils in komplementäre Verbindungselemente 28 an den Fahrzeugen 10 eingesteckt. Die komplementären Verbindungselemente 28 an den Fahrzeugen 10 entsprechen hier demnach Steckdosen 30. Entsprechend sind auch die Steckdosen 30 der Verbindung 22 nach ISO 7638 ausgebildet und die Steckdosen 30 der Verbindung 24 nach ISO 12098.

Fig. 1 zeigt eine Kupplung zweier Fahrzeuge 10 über Anhängerkupplung 16 und Deichsel 18 sowie die elektrischen Verbindungen 20 gemäß dem Stand der Technik.

Fig. 2 zeigt eine exemplarische Darstellung des Zugfahrzeugs 12 und des Fahrzeuganhängers 14 mit detaillierter Darstellung der zwei elektrischen Verbindungen 20. Fig. 2 stellt ebenfalls den Stand der Technik dar. Das Zugfahrzeug 12 umfasst eine Steckdose 30a zum Herstellen einer Verbindung 22 nach ISO 7638. Auch der Fahrzeuganhänger 14 umfasst eine derartige Steckdose 30a. Die beiden Steckdosen 30a sind über eine als Spiralkabel ausgebildete Verbindungsleitung 26 mit zwei Steckern 29 verbunden, wobei diese Verbindungsleitung 26 zur besseren Übersicht lediglich exemplarisch durch den Doppelpfeil 32 dargestellt ist. Die Steckdose 30a des Zugfahrzeugs 12 ist mit einem Bremssteuergerät 34 verbunden. Das Bremssteuergerät 34 erhält von einem Fahrer 36 des Zugfahrzeugs 12 Anforderungssignale 38, die beispielsweise eine Bremsung in Form eines Bremswunsches des Fahrers 36 anfordern. Daraufhin werden vom Bremssteuergerät 34 Bremsen des Zugfahrzeugs 12 mittels einer Steuerung 40 angesteuert. Die Steuerung 40 berücksichtigt zum Ansteuern der nicht dargestellten Bremsen beispielsweise zusätzliche Informationen des Zugfahrzeugs 12, die über eine Fahrzeug-CAN-Schnittstelle 42 empfangen und der Steuerung 40 zugeführt werden.

Außerdem ist die Steuerung 40 eingerichtet, Sensorsignale oder Informationen vom Fahrzeuganhänger 14 zu berücksichtigen. Hierzu weist das Bremssteuergerät 34 eine ISO-CAN-Schnittstelle 44 auf, die beispielsweise nach ISO 11992 genormt ist. Über diese Schnittstelle 44 kann die Steuerung 40 des Bremssteuergeräts 34 nicht nur Sensorsignale oder Informationen vom Fahrzeuganhänger 14 empfangen, sondern auch Steuerbefehle an ein Anhängerbremssteuergerät 46 übertragen. Dies erfolgt, indem die ISO-CAN-Schnittstelle 44 des Zugfahrzeugs 12 über die Verbindung 22 mit einer ISO-CAN-Schnittstelle 48 des Anhängerbremssteuergeräts 46 Daten 79 austauscht. Im Fahrzeuganhänger 14 werden die Daten 79 für die ISO-CAN-Schnittstelle 48 mit einer Steuerung 50 des Anhängerbremssteuergeräts bereitgestellt bzw. empfangen. Über eine Anhänger-CAN-Schnittstelle 52 können weitere Informationen aus dem Fahrzeuganhänger 14, wie beispielsweise Verschleiß, Temperatur der Bremsen und Luftdruck der Räder des Anhängers 14, der Steuerung 50 des Anhängerbremssteuergeräts 46 zugeführt und ebenfalls über die Verbindung 22 dem Bremssteuergerät 34 des Zugfahrzeugs 12 bereitgestellt werden.

Außerdem wird von dem Bremssteuergerät 34 des Zugfahrzeugs 12 über eine weitere Leitung 54 eine Spannungsversorgung für das Anhängerbremssteuergerät 46 bereitgestellt.

Weiterhin ist auch die elektrische Verbindung 24 nach ISO 12098 dargestellt. Entsprechend weisen das Zugfahrzeug 12 sowie der Fahrzeuganhänger 14 jeweils eine Steckdose 30b nach ISO 12098 auf. Über die elektrische Verbindung 24 nach ISO 12098 werden von dem Fahrer 36 erzeugte Anforderungssignale 38, beispielsweise ein Einschaltwunsch einer Beleuchtung, an eine Lichtsteuerung 56 gesendet. Die Lichtsteuerung 56 weist ebenfalls eine Steuerung 58 auf, die über eine Fahrzeug-CAN-Schnittstelle 42 mit einem CAN-Bus des Zugfahrzeugs 12 verbunden ist. Mit der Steuerung 58 der Lichtsteuerung 56 werden elektrische Signale 81 über die elektrischen Leitungen 60a-60d übertragen, die dann über die elektrische Verbindung 24 unmittelbar die Beleuchtung 62 des Fahrzeuganhängers 14 je nach Anforderungssignal 38 des Fahrers 36 ansteuern. Die Beleuchtung 62 kann auch mittels über die Fahrzeug-CAN-Schnittstelle 42 empfangenen Anforderungen angesteuert werden. Über die Verbindung 24 sind demnach die elektrischen Leitungen 60a-60d im Zugfahrzeug 12 sowie im Fahrzeuganhänger 14 jeweils verbunden.

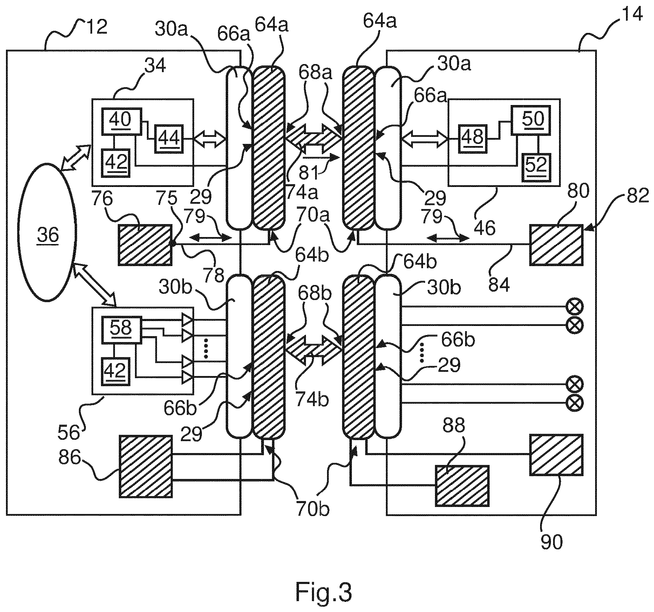

Fig. 3 zeigt Steckverbindervorrichtungen 64a, 64b gemäß einem Ausführungsbeispiel der Erfindung. Die Steckverbindervorrichtungen 64a weisen jeweils eine erste Schnittstelle 66a und eine zweite Schnittstelle 68a auf. Außerdem weisen die Steckverbindervorrichtungen 64a eine Datenschnittstelle 70a auf. Die ersten Schnittstellen 66a der Steckverbindervorrichtungen 64a sind als Verbindungselemente 72a nach ISO 7638 ausgebildet. Diese entsprechen hier Steckern 29, die in die Steckdosen 30a eingesteckt sind. Die Steckverbindervorrichtungen 64a sind über ihre zweiten Schnittstellen 68a mit einer Verbindungsleitung 74a verbunden. Die Verbindungsleitung 74a weist gegenüber der Verbindungsleitung 26 zum Herstellen einer Verbindung 22 nach ISO 7638 wenigstens eine elektrische Leitung mehr auf. Die Datenschnittstelle 70a der am Zugfahrzeug 12 angeordneten Steckverbindervorrichtung 64a ist mit einer Schnittstelle 75 eines Steuergeräts 76 über eine Datenleitung 78 verbunden, um Daten 79 über die Datenschnittstelle 70a an die Steckverbindervorrichtung 64a zu senden und von dieser zu empfangen. Die Daten 79, die beispielsweise vom Steuergerät 76 an die Steckverbindervorrichtung 64a gesendet werden, werden über die zweite Schnittstelle 68a ausgegeben und nach der Übertragung durch die Verbindungsleitung 74a von der zweiten Schnittstelle 68a der Steckverbindervorrichtung 64a des Fahrzeuganhängers 14 empfangen. Diese empfangenen Daten 79 werden dann über eine Datenschnittstelle 70a der Steckverbindervorrichtung 64a des Fahrzeuganhängers 14 ausgegeben und beispielsweise als Steuersignale über eine Datenleitung 84 für eine Sensoreinheit 80, die beispielsweise eine Kamera 82 umfasst, ausgegeben. Die Sensoreinheit 80 nimmt dann beispielsweise in Abhängigkeit der empfangenen Steuersignale Sensorsignale, beispielsweise Kamerabilder, auf und sendet diese über die Datenleitung 84, die beiden Steckverbindervorrichtungen 64a wiederum an das Steuergerät 76 des Zugfahrzeugs 12. Gleichzeitig werden über die Verbindungsleitung 74a auch elektrische Signale 81 übertragen, die auch nach ISO 7638 gemäß Verbindung 22 übertragen werden und wie es hierzu bereits unter Betrachtung der Fig. 2 erläutert wurde.

Außerdem sind in Fig. 3 zwei weitere Steckverbindervorrichtungen 64b gemäß einem Ausführungsbeispiel der Erfindung dargestellt, die ebenfalls eine erste Schnittstelle 66b, eine zweite Schnittstelle 68b und eine Datenschnittstelle 70b umfassen. Die ersten Schnittstellen 66b der Steckverbindervorrichtung 64b sind als Verbindungselemente 28 nach ISO 12098 ausgebildet. Vorzugsweise entsprechen diese ersten Schnittstellen 66b Steckern 29, die in die vorhandenen Steckdosen 30b eingesteckt sind. Die Datenschnittstelle 70b der Steckverbindervorrichtung 64b des Zugfahrzeugs 12 ist mit einem weiteren Steuergerät 86 verbunden, das beispielsweise ein Steuergerät für erweiterte Fahrerassistenzsysteme (ADAS) ist. Das weitere Steuergerät 86 ist somit über die Datenschnittstellen 70b der Steckverbindervorrichtungen 64b und eine die Steckverbindervorrichtungen 64b verbindende Verbindungsleitung 74b mit weiteren Sensoreinheiten 88, 90 verbunden, um Daten 79 auszutauschen. Über die Verbindungsleitung 74b werden zusätzlich die nach ISO 12098 vorgeschriebenen elektrischen Signale zur Ansteuerung der Beleuchtung 62 übertragen, sodass einerseits standardisierte Signale und andererseits Daten 79 mit einer hohen Datenrate zwischen der weiteren Steuerung 86 und den Sensoreinheiten 88 und 90 ausgetauscht werden können.

Die Steckverbindervorrichtungen 64a und 64b sind gemäß diesem Ausführungsbeispiel als Adapter ausgebildet, da sie, wie bereits oben ausgeführt wurde, in die entsprechenden Steckdosen 30a, 30b, die bereits standardisiert an den Fahrzeugen 10 vorhanden sind, eingesteckt werden können.

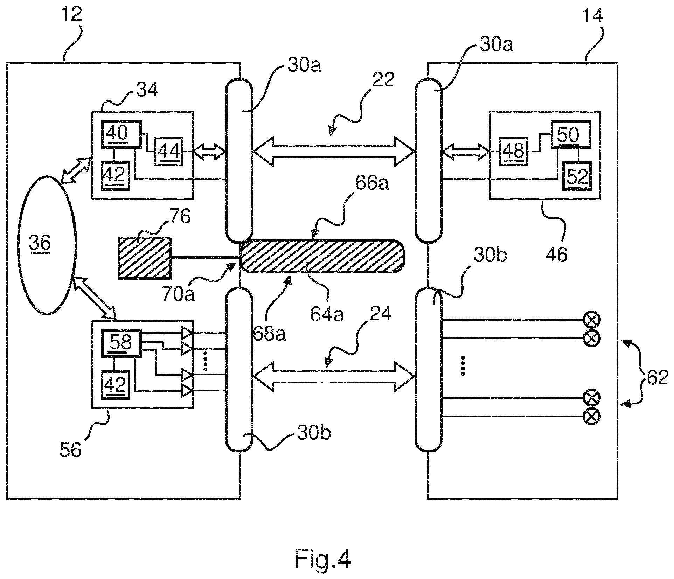

Fig. 4 zeigt den Fall, dass ein Zugfahrzeug 12, wie es in Fig. 3 dargestellt ist, mit einem Fahrzeuganhänger 14 gemäß dem Stand der Technik, wie er in Fig. 2 dargestellt ist, elektrisch verbunden wird. Fig. 4 zeigt gegenüber Fig. 3 ein Zugfahrzeug 12, bei dem nur eine Verbindung 22 nach ISO 7638 mit einer Steckverbindervorrichtung 64a gemäß einem Ausführungsbeispiel der Erfindung verbindbar ist. Zum Herstellen einer Verbindung 22 nach ISO 7638 wurde hier die Steckverbindervorrichtung 64a mit ihrer ersten Schnittstelle 66a aus der Steckdose 30a nach ISO 7638 herausgezogen. Eine standardisierte Verbindung zwischen Zugfahrzeug 12 und Fahrzeuganhänger 14, wie in Fig. 2 dargestellt, ist somit möglich.

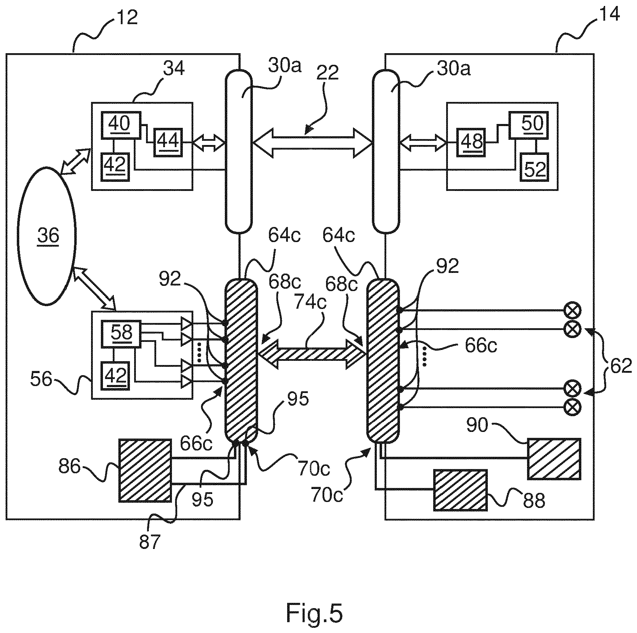

Fig. 5 zeigt ein weiteres Ausführungsbeispiel der Erfindung mit einer Steckverbindervorrichtung 64c. In Fig. 5 sind erneut ein Zugfahrzeug 12 und ein Fahrzeuganhänger 14 dargestellt. Hierbei sind das Zugfahrzeug 12 und der Fahrzeuganhänger 14 über eine Verbindung 22 nach ISO 7638 elektrisch verbunden, wie es auch in Fig. 2 dargestellt ist. Im Gegensatz zur Fig. 2 weisen jedoch Zugfahrzeug 12 sowie auch der Fahrzeuganhänger 14 jeweils eine Steckverbindervorrichtung 64c auf, die die Steckdosen 30b in Fig. 2 ersetzen.

Die Steckverbindervorrichtungen 64c weisen eine erste Schnittstelle 66c, eine zweite Schnittstelle 68c sowie eine Datenschnittstelle 70c auf. Die erste Schnittstelle 66c der Steckverbindervorrichtung 64c ist in Fig. 5 mit Lötkontakten 92 und die Datenschnittstelle 70c mit Lötkontakten 95 gebildet. Die zweiten Schnittstellen 68c entsprechen gemäß dem Ausführungsbeispiel in Fig. 5 einem Verbindungselement 28 zum Herstellen einer Verbindung nach ISO 12098. Die zweiten Schnittstellen 68c sind hier vorzugsweise als Steckdosen 30c ausgebildet. Die zweiten Schnittstellen 68c sind gemäß der Darstellung in Fig. 5 über eine Verbindungsleitung 74c verbunden, die Verbindungselemente, nämlich vorzugsweise Stecker 29, an ihren Enden aufweist, die mit den zweiten Schnittstellen 68c verbindbar sind.

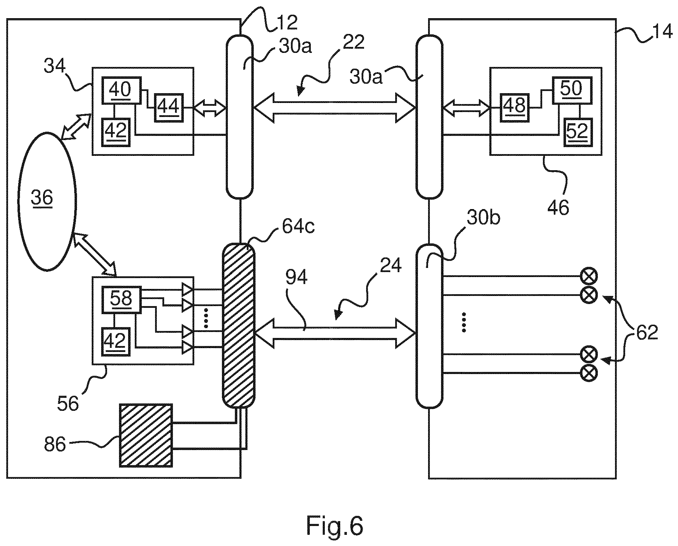

Die Verbindungselemente 28 der zweiten Schnittstellen 68c sind hierbei so gewählt, dass einerseits eine standardisierte Verbindungsleitung 26 mit standardisierten Steckern 29 nach ISO 12098 eingesteckt werden kann, wobei die dargestellte Verbindungsleitung 74c mindestens einen Leiter mehr als eine standardisierte ISO 12098 Verbindungsleitung 26 umfasst und somit zusätzliche Kontakte bereitgestellt werden, die von Kontakten der Verbindungselemente 28 der zweiten Schnittstelle 68c kontaktiert werden. Die als Verbindungselemente 28 ausgebildeten zweiten Schnittstellen 68c weisen demnach beispielsweise eine zusätzliche Kontaktbuchse zur Aufnahme eines zusätzlichen Kontaktstifts gegenüber dem ISO 12098 Standard auf oder stellen zwei Kontakte innerhalb einer Kontaktbuchse bereit. Hierdurch ist es dann möglich, dass, wie in Fig. 6 dargestellt, ein Zugfahrzeug 12 gemäß der Darstellung in Fig. 5 ebenfalls über eine standardisierte Verbindungsleitung 26 nach ISO 12098 mit einem Fahrzeuganhänger 14 verbunden werden kann, der keine Steckverbindervorrichtung 64c gemäß der Erfindung bereitstellt und somit nicht zum Austausch von Daten 79 eingerichtet ist.

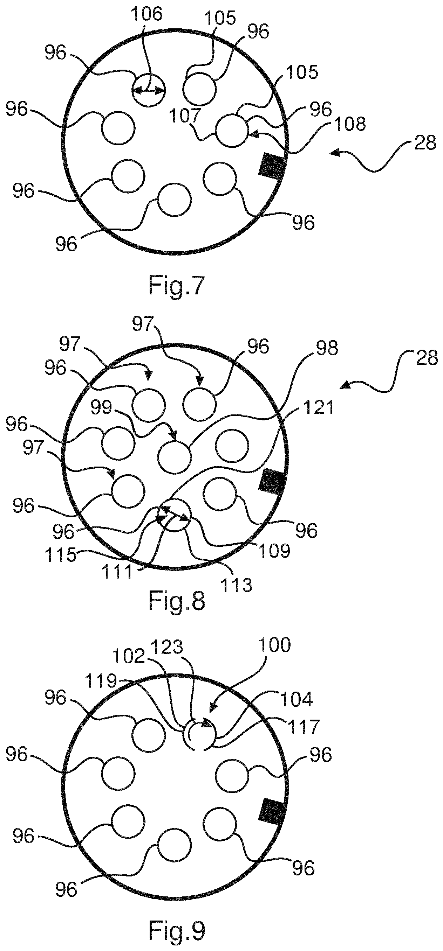

Fig. 7 zeigt ein Verbindungselement 28 zum Herstellen einer Verbindung nach ISO 7638. Demnach weist das Verbindungselement 28 sieben Kontakte 96 auf, um mit sieben komplementären Kontakten eines weiteren Verbindungselements 28 verbunden zu werden. Ein komplementärer Kontakt ist beispielsweise ein Kontaktstift, wenn ein Kontakt eine Kontaktbuchse ist, und beispielsweise eine Kontaktbuchse, wenn ein Kontakt ein Kontaktstift ist. Beispielsweise wird vorliegend in Fig. 7 davon ausgegangen, dass die Kontakte 96 als Kontaktstifte 105 ausgebildet sind. Die Kontaktstifte 105 weisen einen runden Querschnitt 106 auf und umfassen eine äußere Mantelfläche 107. Die äußere Mantelfläche 107 bildet einen Einfügebereich 108 zum Einfügen in eine Kontaktbuchse.

Fig. 8 zeigt ein Verbindungselement 28 gemäß der Erfindung, wie es beispielsweise der zweiten Schnittstelle 68c in Fig. 5 entspricht. Die Kontakte 96 an standardisierten Positionen 97 in Fig. 8 weisen gegenüber der Fig. 7 einen zusätzlichen Kontakt 98 auf, der so an einer Position 99 angeordnet ist, dass er die übrigen Kontakte 96 unbeeinflusst lässt. Ist das in Fig. 8 dargestellte Verbindungselement 28 als Steckdose ausgebildet, lassen sich Stecker gemäß ISO 7638 problemlos in diese Steckdose einstecken. Hierbei bleibt jedoch der Kontakt 98 im Zentrum kontaktlos. Mit einer speziellen Verbindungsleitung 74, die einen an das Verbindungselement 28 in Fig. 8 angepassten Stecker aufweist, können jedoch mithilfe einer der bereits vorhanden Kontakte 96 und dem zusätzlichen Kontakt 98 zusätzlich Daten 79 übertragen werden. In Fig. 8 wird nun exemplarisch davon ausgegangen, dass die Kontakte 96 als Kontaktbuchsen 109 ausgebildet sind. Die Kontaktbuchsen 109 weisen einen runden Querschnitt 111 auf und umfassen eine innere Mantelfläche 113. Die innere Mantelfläche 113 bildet einen Aufnahmebereich 115 zum Aufnehmen des Einfügebereichs 108 als Kontaktstifte 105 ausgebildeter Kontakte 96.

Fig. 9 zeigt eine alternative Ausbildung des Verbindungselements 28 gemäß der Erfindung, wobei hier ebenfalls Kontakte 96 gezeigt sind, die den standardisierten Kontakten zum Herstellen einer Verbindung nach ISO 7638 dienen. Ein Kontakt 100 ist jedoch in zwei einzelne Kontaktflächen 102 und 104 eingeteilt, die elektrisch voneinander getrennt sind. Wird demnach ein herkömmliches Verbindungselement 28 nach ISO 7638 mit dem in Fig. 9 dargestellten Verbindungselement 28 verbunden, so werden die beiden Kontaktflächen 102 und 104 überbrückt und eine übliche ISO 7638 Verbindung kann hergestellt werden. Mit einer speziellen Verbindungsleitung 76, die ein entsprechendes Verbindungselement mit ebenfalls getrennten Kontaktflächen zur Verbindung mit dem Kontakt 100 aufweist, können jedoch zusätzlich über den Kontakt 100 Daten 79 übertragen werden. Die Kontaktflächen 102, 104 sind als Teilmantelflächen 117, 119 einer zylinderförmigen Mantelfläche 107, 113 ausgebildet, die in Umfangsrichtung 123 eines durch den Querschnitt 106, 111 der Mantelfläche 107, 113 gebildeten Kreises 121 nebeneinander liegen.

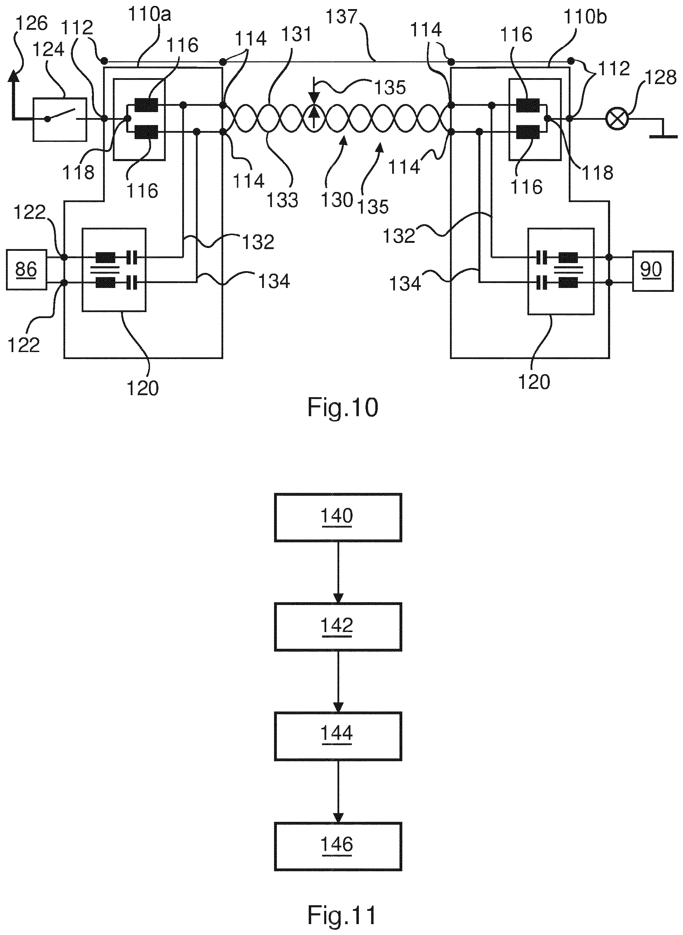

Fig. 10 zeigt ausschnittsweise eine elektrische Verbindung zwischen einem Zugfahrzeug 12 und einem Fahrzeuganhänger 14 zur Übertragung eines einzelnen Signals 81 gemäß ISO 7638 oder ISO 12098 und gleichzeitiger Datenübertragung mit hoher Datenrate. Hierfür ist ein Verzweigungselement 110a dargestellt, das Bestandteil der Steckverbindervorrichtung 64a, 64b, 64c ist. Das Verzweigungselement 110a weist einen ersten Kontakt 112 auf, der Bestandteil der ersten Schnittstelle 66a, 66b, 66c ist und zwei zweite Kontakte 114, die Bestandteil der zweiten Schnittstelle 68a, 68b, 68c sind. Die zweiten Kontakte 114 sind jeweils über ein Filterelement 116 mit einem Verbindungspunkt 118 verbunden. Der Verbindungspunkt 118 ist auch mit dem ersten Kontakt 112 verbunden. Außerdem sind die zweiten Kontakte 114 über eine weitere Filtereinrichtung 120 mit dritten Kontakten 122 verbunden, wobei die dritten Kontakte 122 Bestandteil der Datenschnittstelle 70a, 70b, 70c sind. An die dritten Kontakte 122 der zweiten Datenschnittstelle ist ein Steuergerät 86 des Zugfahrzeugs 12 exemplarisch angeschlossen.

Das Verzweigungselement 110a ist Bestandteil einer Steckverbindervorrichtung eines Zugfahrzeugs 12. Der erste Kontakt 112 ist beispielsweise mit einem Lichtsteuergerät verbunden, das nach Anforderung durch einen Fahrer den dargestellten Schalter 124 öffnet oder schließt. Im geschlossenen Zustand wird beispielsweise eine Spannung 126, zum Beispiel 24 Volt, für ein Leuchtmittel 128 im Fahrzeuganhänger 14 bereitgestellt. Die Spannung 126 wird über die Filterelemente 116 und eine verdrillte Leitung 130 mit zwei verdrillten Leitern 131, 133, die Bestandteil einer Verbindungsleitung 135 mit weiteren Leitern 137 ist, einer weiteren Steckverbindervorrichtung 64a, 64b, 64c zugeführt. Die Leiter 131, 133 der verdrillten Leitung 130 weisen einen geringeren Querschnitt 135 als die weiteren Leiter 137 auf. In der weiteren Steckverbindervorrichtung ist ebenfalls ein Verzweigungselement 110b angeordnet, das hier zur besseren Übersicht losgelöst von der Steckverbindervorrichtung, wie auch das Verzweigungselement 110a, dargestellt ist. Die weitergeleitete Spannung 126 wird über die Filterelemente 116 und einen weiteren Verbindungspunkt 118 des Verzweigungselements 110b zum Leuchtmittel 128 geführt. Gleichzeitig werden über die Steuerung 86 und die Datenschnittstelle 70 Daten 79 auf die verdrillte Leitung 130 aufmoduliert. Die zwei Verbindungen 132, 134 dienen beispielsweise, um einen differentiellen Leitungscode, nämlich beispielsweise mit entgegengesetztem Polaritätswechsel, zu übertragen. Die weitere Filtereinrichtung 120 dient demnach, um über die verdrillte Leitung 130 übertragene Gleichspannungsanteile zum Versorgen des Leuchtmittels 128 herauszufiltern, während die Filter 116 dienen, um die aufmodulierten Schwingungen zu entfernen. Somit kann gleichzeitig über die verdrillte Leitung 130 einerseits ein standardisiertes ISO 7638 oder ISO 12098 Signal und andererseits eine Datenübertragung erfolgen.

Fig. 11 beschreibt die Schritte des Verfahrens gemäß einem Ausführungsbeispiel. In einem Schritt 140 werden Daten 79 an einer dritten Schnittstelle 70a, 70b, 70c einer erfindungsgemäßen Steckverbindervorrichtung 64a, 64b, 64c bereitgestellt und in einem Schritt 142 die Daten 79 an einer zweiten Schnittstelle 68a, 68b, 68c einer erfindungsgemäßen Steckverbindervorrichtung ausgesendet. Im Schritt 144 werden Daten 79 an einer zweiten Schnittstelle 68a, 68b, 68c einer weiteren erfindungsgemäßen Steckverbindervorrichtung 64a, 64b, 64c empfangen und an einer Datenschnittstelle 70a, 70b, 70c der weiteren Steckverbindervorrichtung 64a, 64b, 64c in einem Schritt 146 bereitgestellt.

### Bezugszeichenliste (Teil der Beschreibung)

10 Fahrzeug
12 Zugfahrzeug
14 Fahrzeuganhänger
16 Anhängerkupplung
18 Deichsel
20 elektrische Verbindung
22 Verbindung nach ISO 7638
24 Verbindung nach ISO 12098
26 Verbindungsleitung
28 Verbindungselement
29 Stecker
30, 30a, 30b Steckdose
32 Doppelpfeil
34 Bremssteuergerät
36 Fahrer
38 Anforderungssignal
40 Steuerung des Bremssteuergeräts
42 Fahrzeug-CAN-Schnittstelle
44 ISO-CAN-Schnittstelle des Bremssteuergeräts
46 Anhängerbremssteuergerät
48 ISO-CAN-Schnittstelle des Anhängerbremssteuergeräts
50 Steuerung des Anhängerbremssteuergeräts
52 Anhänger-CAN-Schnittstelle
54 weitere Leitung
56 Lichtsteuerung
58 Steuerung der Lichtsteuerung
60a-60d elektrische Leitungen
62 Beleuchtung
64, 64a, 64b, 64c Steckverbindervorrichtung
66a, 66b, 66c erste Schnittstelle
68a, 68b, 68c zweite Schnittstelle
70a, 70b, 70c Datenschnittstelle
72a Verbindungselement nach ISO 7638
72b Verbindungselement nach ISO 12098
74a, 74b, 74c Verbindungsleitung
75 Schnittstelle des Steuergeräts
76 Steuergerät
78 Datenleitung des Steuergeräts
79 Daten
80 Sensoreinheit
81 elektrische Signale
82 Kamera
84 Datenleitung der Sensoreinheit
86 Steuergerät
87 elektrische Leitungen
88, 90 Sensoreinheit
92 Lötkontakt
94 Verbindungskabel nach ISO 12098
95 dritter Kontakt
96 Kontakt
97 Position Kontakte
98 zusätzlicher Kontakt
99 Position zusätzlicher Kontakt
100 Kontakt
102, 104 Kontaktfläche
105 Kontaktstift
106 Querschnitt der Kontaktstifte
107 äußere Mantelfläche
108 Einfügebereich
109 Kontaktbuchse
110 Verzweigungselement
111 Querschnitt der Kontaktbuchsen
112 erster Kontakt
113 innere Mantelfläche
114 zweiter Kontakt
115 Aufnahmebereich
116 Filterelement
117 Teilmantelfläche
118 Verbindungspunkt
119 Teilmantelfläche
120 Filtereinrichtung
121 Kreis
122 dritter Kontakt
123 Umfangsrichtung
124 Schalter
126 Spannung
128 Leuchtmittel
130 verdrillte Leitung
131, 133, 135 Leiter
132, 134 Verbindung
135 Querschnitt der verdrillten Leiter
137 Verbindungsleitung
140-146 Schritte des Verfahrens

## Patentansprüche

1. Steckverbindervorrichtung (64, 64a, 64b, 64c) für ein Fahrzeug (10), insbesondere ein Zugfahrzeug (12) oder einen Fahrzeuganhänger (14), zum Übertragen von Daten, umfassend:
- eine erste Schnittstelle (66, 66a, 66b, 66c) zum Verbinden mit einem Fahrzeug (10),
- eine zweite Schnittstelle (68, 68a, 68b, 68c) zum Verbinden mit einer Verbindungsleitung (26, 74a, 74b, 74c, 137),
wobei die erste Schnittstelle (66, 66a, 66b, 66c) und/oder die zweite Schnittstelle (68, 68a, 68b, 68c) als Verbindungselement (28), insbesondere als Stecker (29) oder Steckdose (30), zum Herstellen einer Verbindung (22, 24) nach einem ISO oder SAE Standard, insbesondere einer Verbindung (22) nach ISO 7638 oder einer Verbindung (24) nach ISO 12098, ausgebildet ist,
- eine Datenschnittstelle (70, 70a, 70b, 70c) zum Verbinden mit einer Datenleitung (78, 84) des Fahrzeugs (10),
wobei die Datenschnittstelle (70, 70a, 70b, 70c) elektrisch mit der ersten Schnittstelle (66, 66a, 66b, 66c) verbunden ist zum Übertragen von elektrischen Signalen (81) und/oder Daten (79) zwischen der Datenschnittstelle (70, 70a, 70b, 70c) und der zweiten Schnittstelle (68, 68a, 68b, 68c) und
die erste Schnittstelle (66, 66a, 66b, 66c) elektrisch mit der zweiten Schnittstelle (68, 68a, 68b, 68c) verbunden ist zum Übertragen von elektrischen Signalen (81) und/oder Daten (79) zwischen der ersten Schnittstelle (66, 66a, 66b, 66c) und der zweiten Schnittstelle (68, 68a, 68b, 68c),
wobei die erste Schnittstelle (66, 66a, 66b, 66c) mehrere erste Kontakte (112), die zweite Schnittstelle (68, 68a, 68b, 68c) mehrere zweite Kontakte (114) und die Datenschnittstelle (70, 70a, 70b, 70c) mehrere dritte Kontakte (122) aufweist und die Steckverbindervorrichtung (64, 64a, 64b, 64c) mindestens ein Verzweigungselement (110, 110a, 110b) mit einem Verbindungspunkt (118) und mindestens zwei Filterelementen (116) aufweist, wobei mit dem Verbindungspunkt (118) einer der ersten Kontakte (112) verbunden ist und mit dem Verbindungspunkt (118) zwei der zweiten Kontakte (114) jeweils über eines der Filterelemente (116) elektrisch verbunden sind, wobei außerdem zwei der dritten Kontakte (122), vorzugsweise über eine Filtereinrichtung (120), jeweils mit einem der zwei zweiten Kontakte (114) verbunden sind,
wobei die ersten Kontakte (112) der ersten Schnittstelle (66, 66a, 66b, 66c) als Lötkontakte (92) zum festen Verbinden mit Leitungen (60a bis 60c) eines Fahrzeugs (10) ausgebildet sind und/oder die zweiten Kontakte (114) als Verbindungselement (28) zum Herstellen einer Verbindung (22, 24) nach einem ISO oder SAE Standard, insbesondere einer Verbindung (22) nach ISO 7638 oder einer Verbindung (24) nach ISO 12098, ausgebildet sind,
wobei die zweite Schnittstelle (68, 68a, 68b, 68c) mindestens einen weiteren zweiten Kontakt (98) aufweist, der im durch die zweite Schnittstelle (68, 68a, 68b, 68c) gebildeten Verbindungselement (28) eine Position (99) aufweist, die unterschiedlich zu Positionen (97) der nach ISO oder SAE Standard, insbesondere nach ISO 7638 oder ISO 12098, vorgeschriebenen Kontakte (96) ist, sodass Kontakte (96), die nach ISO oder SAE Standard, insbesondere nach ISO 7638 oder ISO 12098, vorgeschrieben sind, durch den mindestens einen weiteren zweiten Kontakt (98) unbeeinflusst bleiben und
wobei die zweiten Kontakte (98) als Kontaktflächen (102, 104) in Kontaktbuchsen oder als Kontaktstifte ausgebildet sind, wobei mindestens eine der Kontaktbuchsen oder einer der Kontaktstifte zwei elektrisch getrennte Kontaktflächen (102, 104) aufweist.

2. Steckverbindervorrichtung (64, 64a, 64b, 64c) nach Anspruch 1, wobei die Steckverbindervorrichtung (64, 64a, 64b, 64c) mindestens zwei Verzweigungselemente (110, 110a, 110b) aufweist.

3. Steckverbindervorrichtung (64, 64a, 64b, 64c) nach einem der vorhergehenden Ansprüche, wobei die erste Schnittstelle (66, 66a, 66b, 66c) als Verbindungselement (28) zum Herstellen einer Verbindung (22, 24) nach einem ISO oder SAE Standard, insbesondere einer Verbindung (22) nach ISO 7638 oder einer Verbindung (24) nach ISO 12098, ausgebildet ist und vorzugsweise die zweite Schnittstelle (68, 68a, 68b, 68c) als proprietäres Verbindungselement (28) ausgebildet ist.

4. Steckverbindervorrichtung (64, 64a, 64b, 64c) nach einem der Ansprüche 1 bis 3 mit einem Verbindungselement (28), wobei das Verbindungselement (28) umfasst:
- mehrere Kontaktbuchsen (109), die jeweils einen Aufnahmebereich (115) zur Aufnahme eines Kontaktstifts (105) aufweisen, wobei mindestens eine der Kontaktbuchsen (109) mindestens zwei elektrisch getrennte Kontaktflächen (102, 104) aufweist, und/oder
- mehrere Kontaktstifte (105), die jeweils einen Einfügebereich (108) zum Einfügen in einen Aufnahmebereich (115) einer Kontaktbuchse (109) aufweisen, wobei mindestens einer der Kontaktstifte (105) mindestens zwei elektrisch getrennte Kontaktflächen (102, 104) aufweist.

5. Steckverbindervorrichtung (64, 64a, 64b, 64c) nach Anspruch 4, wobei das Verbindungselement (28)
- mehrere Kontaktbuchsen (109) aufweist und der Aufnahmebereich (115) der Kontaktbuchsen (109) zylinderförmig mit einer inneren Mantelfläche (113) ausgebildet ist, wobei die elektrisch getrennten Kontaktflächen (102, 104) der mindestens einen Kontaktbuchse (109) mit mindestens zwei in Umfangsrichtung (123) der inneren Mantelfläche (113) nebeneinanderliegenden Teilmantelflächen (117, 119) gebildet sind, und/oder
- mehrere Kontaktstifte (105) aufweist und der Einfügebereich (108) der Kontaktstifte (105) zylinderförmig mit einer äußeren Mantelfläche (107) ausgebildet ist, wobei die elektrisch getrennten Kontaktflächen (102, 104) des mindestens einen Kontaktstifts (105) mit mindestens zwei in Umfangsrichtung (123) der äußeren Mantelfläche (107) nebeneinanderliegenden Teilmantelflächen (117, 119) gebildet sind.

6. System mit einer Steckverbindervorrichtung (64, 64a, 64b, 64c) nach einem der Ansprüche 1 bis 5 und einem Steuergerät (86, 76, 80, 88, 90), insbesondere einer Sensoreinheit (80, 88, 90), vorzugsweise einer Kamera (82), oder einer Auswerteeinheit (86), wobei eine Schnittstelle (75) des Steuergeräts (76, 86, 80, 88, 90) mit der Datenschnittstelle (70, 70a, 70b, 70c) der Steckverbindervorrichtung (64, 64a, 64b, 64c) verbunden ist.

7. Fahrzeug (10) mit einem System nach Anspruch 6 oder einer Steckverbindervorrichtung (64, 64a, 64b, 64c) nach einem der Ansprüche 1 bis 5.

8. Verfahren zum Übertragen von Daten (79) zwischen zwei Fahrzeugen (12), umfassend die Schritte:
- Bereitstellen (140) von Daten (79) an einer Datenschnittstelle (70, 70a, 70b, 70c) einer Steckverbindervorrichtung (64, 64a, 64b, 64c) nach einem der Ansprüche 1 bis 5,
- Aussenden (142) der bereitgestellten Daten (79) an einer zweiten Schnittstelle (68, 68a, 68b, 68c) einer Steckverbindervorrichtung (64, 64a, 64b, 64c) nach einem der Ansprüche 1 bis 5,
- Empfangen (144) der ausgesendeten Daten (79) an einer zweiten Schnittstelle (68, 68a, 68b, 68c) einer weiteren Steckverbindervorrichtung (64, 64a, 64b, 64c) nach einem der Ansprüche 1 bis 5 und
- Bereitstellen (146) der empfangenen Daten (79) an einer Datenschnittstelle (70, 70a, 70b, 70c) der weiteren Steckverbindervorrichtung (64, 64a, 64b, 64c) nach einem der Ansprüche 1 bis 5.

## Claims

1. Plug connector device (64, 64a, 64b, 64c) for a vehicle (10), in particular a towing vehicle (12) or a vehicle trailer (14), for transmitting data, comprising:
- a first interface (66, 66a, 66b, 66c) for connecting to a vehicle (10),
- a second interface (68, 68a, 68b, 68c) for connecting to a connecting line (26, 74a, 74b, 74c, 137),
wherein the first interface (66, 66a, 66b, 66c) and/or the second interface (68, 68a, 68b, 68c) is designed as a connecting element (28), in particular as a plug (29) or socket (30), for establishing a connection (22, 24) in accordance with an ISO or SAE standard, in particular a connection (22) in accordance with ISO 7638 or a connection (24) in accordance with ISO 12098,
- a data interface (70, 70a, 70b, 70c) for connecting to a data line (78, 84) of the vehicle (10),
wherein the data interface (70, 70a, 70b, 70c) is electrically connected to the first interface (66, 66a, 66b, 66c) for transmitting electrical signals (81) and/or data (79) between the data interface (70, 70a, 70b, 70c) and the second interface (68, 68a, 68b, 68c) and
the first interface (66, 66a, 66b, 66c) is electrically connected to the second interface (68, 68a, 68b, 68c) for transmitting electrical signals (81) and/or data (79) between the first interface (66, 66a, 66b, 66c) and the second interface (68, 68a, 68b, 68c),
wherein the first interface (66, 66a, 66b, 66c) has a plurality of first contacts (112), the second interface (68, 68a, 68b, 68c) has a plurality of second contacts (114), and the data interface (70, 70a, 70b, 70c) has a plurality of third contacts (122), and the plug connector device (64, 64a, 64b, 64c) has at least one branching element (110, 110a, 110b) having a connection point (118) and at least two filter elements (116), wherein one of the first contacts (112) is connected to the connection point (118) and two of the second contacts (114) are each electrically connected to the connection point (118) via one of the filter elements (116), wherein, in addition, two of the third contacts (122) are each connected, preferably via a filter device (120), to one of the two second contacts (114),
wherein the first contacts (112) of the first interface (66, 66a, 66b, 66c) are designed as solder contacts (92) for fixed connection to lines (60a to 60c) of a vehicle (10) and/or the second contacts (114) are designed as a connecting element (28) for establishing a connection (22, 24) in accordance with an ISO or SAE standard, in particular a connection (22) in accordance with ISO 7638 or a connection (24) in accordance with ISO 12098,
wherein the second interface (68, 68a, 68b, 68c) has at least one further second contact (98) which has, in the connecting element (28) formed by the second interface (68, 68a, 68b, 68c), a position (99) which is different from positions (97) of the contacts (96) stipulated in accordance with ISO or SAE standards, in particular ISO 7638 or ISO 12098, and so contacts (96) stipulated in accordance with ISO or SAE standards, in particular ISO 7638 or ISO 12098, remain unaffected by the at least one further second contact (98) and
wherein the second contacts (98) are designed as contact surfaces (102, 104) in contact sockets or as contact pins, wherein at least one of the contact sockets or one of the contact pins comprises two electrically isolated contact surfaces (102, 104).

2. Plug connector device (64, 64a, 64b, 64c) according to claim 1, wherein the plug connector device (64, 64a, 64b, 64c) comprises at least two branching elements (110, 110a, 110b).

3. Plug connector device (64, 64a, 64b, 64c) according to any of the preceding claims, wherein the first interface (66, 66a, 66b, 66c) is designed as a connecting element (28) for establishing a connection (22, 24) in accordance with an ISO or SAE standard, in particular a connection (22) in accordance with ISO 7638 or a connection (24) in accordance with ISO 12098, and preferably the second interface (68, 68a, 68b, 68c) is designed as a proprietary connecting element (28).

4. Plug connector device (64, 64a, 64b, 64c) according to any of claims 1 to 3 having a connecting element (28), wherein the connecting element (28) comprises:
- a plurality of contact sockets (109), each having a receiving region (115) for receiving a contact pin (105), wherein at least one of the contact sockets (109) has at least two electrically isolated contact surfaces (102, 104), and/or
- a plurality of contact pins (105), each having an insertion region (108) for insertion into a receiving region (115) of a contact socket (109), wherein at least one of the contact pins (105) has at least two electrically isolated contact surfaces (102, 104).

5. Plug connector device (64, 64a, 64b, 64c) according to claim 4, wherein the connecting element (28) comprises
- a plurality of contact sockets (109) and the receiving region (115) of the contact sockets (109) is cylindrical having an inner lateral surface (113), wherein the electrically isolated contact surfaces (102, 104) of the at least one contact socket (109) have at least two partial lateral surfaces (117, 119) next to one another in the circumferential direction (123) of the inner lateral surface (113), and/or
- a plurality of contact pins (105) and the insertion region (108) of the contact pins (105) is cylindrical having an outer lateral surface (107), wherein the electrically isolated contact surfaces (102, 104) of the at least one contact pin (105) have at least two partial lateral surfaces (117, 119) next to one another in the circumferential direction (123) of the outer lateral surface (107).

6. System comprising a plug connector device (64, 64a, 64b, 64c) according to any of claims 1 to 5 and a control apparatus (86, 76, 80, 88, 90), in particular a sensor unit (80, 88, 90), preferably a camera (82), or an evaluation unit (86), wherein an interface (75) of the control apparatus (76, 86, 80, 88, 90) is connected to the data interface (70, 70a, 70b, 70c) of the plug connector device (64, 64a, 64b, 64c).

7. Vehicle (10) comprising a system according to claim 6 or a plug connector device (64, 64a, 64b, 64c) according to any of claims 1 to 5.

8. Method for transmitting data (79) between two vehicles (12), comprising the steps of:
- providing (140) data (79) to a data interface (70, 70a, 70b, 70c) of a plug connector device (64, 64a, 64b, 64c) according to any of claims 1 to 5,
- transmitting (142) the provided data (79) to a second interface (68, 68a, 68b, 68c) of a plug connector device (64, 64a, 64b, 64c) according to any of claims 1 to 5,
- receiving (144) the transmitted data (79) at a second interface (68, 68a, 68b, 68c) of a further plug connector device (64, 64a, 64b, 64c) according to any of claims 1 to 5 and
- providing (146) the received data (79) to a data interface (70, 70a, 70b, 70c) of the further plug connector device (64, 64a, 64b, 64c) according to any of claims 1 to 5.

## Revendications

1. Dispositif de connexion à fiches (64, 64a, 64b, 64c) pour un véhicule (10), en particulier un véhicule tracteur (12) ou une remorque de véhicule (14), pour la transmission de données, comprenant :
- une première interface (66, 66a, 66b, 66c) pour la connexion à un véhicule (10),
- une seconde interface (68, 68a, 68b, 68c) pour la connexion à une ligne de connexion (26, 74a, 74b, 74c, 137),
dans lequel la première interface (66, 66a, 66b, 66c) et/ou la seconde interface (68, 68a, 68b, 68c) sont réalisées sous forme d'éléments de connexion (28), en particulier sous forme de fiches mâles (29) ou de fiches femelles (30), pour l'établissement d'une connexion (22, 24) selon une norme ISO ou SAE, en particulier d'une connexion (22) selon la norme ISO 7638 ou d'une connexion (24) selon la norme ISO 12098,
- une interface de données (70, 70a, 70b, 70c) pour la connexion à une ligne de transmission données (78, 84) du véhicule (10),
dans lequel l'interface de données (70, 70a, 70b, 70c) est connectée électriquement à la première interface (66, 66a, 66b, 66c) pour la transmission de signaux électriques (81) et/ou de données (79) entre l'interface de données (70, 70a, 70b, 70c) et la seconde interface (68, 68a, 68b, 68c), et
la première interface (66, 66a, 66b, 66c) est connectée électriquement à la seconde interface (68, 68a, 68b, 68c) pour la transmission de signaux électriques (81) et/ou de données (79) entre la première interface (66, 66a, 66b, 66c) et la seconde interface (68, 68a, 68b, 68c),
dans lequel la première interface (66, 66a, 66b, 66c) présente plusieurs premiers contacts (112), la seconde interface (68, 68a, 68b, 68c) présente plusieurs deuxièmes contacts (114) et l'interface de données (70, 70a, 70b, 70c) présente plusieurs troisièmes contacts (122), et le dispositif de connexion à fiches (64, 64a, 64b, 64c) présente au moins un élément de branchement (110, 110a, 110b) comportant un point de connexion (118) et au moins deux éléments de filtrage (116), dans lequel l'un des premiers contacts (112) est connecté au point de connexion (118) et deux des deuxièmes contacts (114) sont connectés électriquement au point de connexion (118) respectivement par l'intermédiaire de l'un des éléments de filtrage (116), dans lequel deux des troisièmes contacts (122) sont en outre connectés, de préférence par l'intermédiaire d'un moyen de filtrage (120), respectivement à l'un des deux deuxièmes contacts (114),
dans lequel les premiers contacts (112) de la première interface (66, 66a, 66b, 66c) sont réalisés sous forme de contacts à braser (92) pour la connexion fixe avec des lignes (60a à 60c) d'un véhicule (10) et/ou les deuxièmes contacts (114) sont réalisés sous forme d'élément de connexion (28) pour l'établissement d'une connexion (22, 24) selon une norme ISO ou SAE, en particulier d'une connexion (22) selon la norme ISO 7638 ou d'une connexion (24) selon la norme ISO 12098,
dans lequel la seconde interface (68, 68a, 68b, 68c) présente au moins un deuxième contact supplémentaire (98) qui, dans l'élément de connexion (28) formé par la seconde interface (68, 68a, 68b, 68c), présente une position (99) qui est différente des positions (97) des contacts (96) prévus par la norme ISO ou SAE, en particulier par la norme ISO 7638 ou ISO 12098, de sorte que les contacts (96) prévus par la norme ISO ou SAE, en particulier par la norme ISO 7638 ou ISO 12098, restent non influencés par l'au moins un deuxième contact supplémentaire (98), et
dans lequel les deuxièmes contacts (98) sont réalisés sous forme de surfaces de contact (102, 104) dans des douilles de contact ou sous forme de broches de contact, dans lequel au moins l'une des douilles de contact ou l'une des broches de contact présente deux surfaces de contact (102, 104) séparées électriquement.

2. Dispositif de connexion à fiches (64, 64a, 64b, 64c) selon la revendication 1, dans lequel le dispositif de connexion à fiches (64, 64a, 64b, 64c) présente au moins deux éléments de branchement (110, 110a, 110b).

3. Dispositif de connexion à fiches (64, 64a, 64b, 64c) selon l'une des revendications précédentes, dans lequel la première interface (66, 66a, 66b, 66c) est réalisée sous forme d'élément de connexion (28) pour l'établissement d'une connexion (22, 24) selon une norme ISO ou SAE, en particulier d'une connexion (22) selon la norme ISO 7638 ou d'une connexion (24) selon la norme ISO 12098, et de préférence la seconde interface (68, 68a, 68b, 68c) est réalisée sous forme d'élément de connexion (28) propriétaire.

4. Dispositif de connexion à fiches (64, 64a, 64b, 64c) selon l'une des revendications 1 à 3, comportant un élément de connexion (28), dans lequel l'élément de connexion (28) comprend :
- plusieurs douilles de contact (109) présentant respectivement une zone de réception (115) pour la réception d'une broche de contact (105), dans lequel au moins une des douilles de contact (109) présente au moins deux surfaces de contact (102, 104) séparées électriquement, et/ou
- plusieurs broches de contact (105) présentant respectivement une zone d'insertion (108) pour l'insertion dans une zone de réception (115) d'une douille de contact (109), dans lequel au moins l'une des broches de contact (105) présente au moins deux surfaces de contact (102, 104) séparées électriquement.

5. Dispositif de connexion à fiches (64, 64a, 64b, 64c) selon la revendication 4, dans lequel l'élément de liaison (28)
- présente plusieurs douilles de contact (109) et la zone de réception (115) des douilles de contact (109) est réalisée en forme de cylindre avec une surface d'enveloppe intérieure (113), dans lequel les surfaces de contact (102, 104) séparées électriquement de l'au moins une douille de contact (109) sont formées avec au moins deux surfaces d'enveloppe partielles (117, 119) juxtaposées dans la direction circonférentielle (123) de la surface d'enveloppe intérieure (113), et/ou
- présente plusieurs broches de contact (105) et la zone d'insertion (108) des broches de contact (105) est réalisée en forme de cylindre avec une surface d'enveloppe extérieure (107), dans lequel les surfaces de contact (102, 104) électriquement séparées de l'au moins une broche de contact (105) sont formées avec au moins deux surfaces d'enveloppe partielles (117, 119) juxtaposées dans la direction circonférentielle (123) de la surface d'enveloppe extérieure (107).

6. Système comportant un dispositif de connexion à fiches (64, 64a, 64b, 64c) selon l'une des revendications 1 à 5 et un appareil de commande (86, 76, 80, 88, 90), en particulier une unité de détection (80, 88, 90), de préférence une caméra (82), ou une unité d'évaluation (86), dans lequel une interface (75) de l'appareil de commande (76, 86, 80, 88, 90) est connectée à l'interface de données (70, 70a, 70b, 70c) du dispositif de connexion à fiches (64, 64a, 64b, 64c).

7. Véhicule (10) comportant un système selon la revendication 6 ou un dispositif de connexion à fiches (64, 64a, 64b, 64c) selon l'une des revendications 1 à 5.

8. Procédé pour la transmission de données (79) entre deux véhicules (12), comprenant les étapes consistant à :
- fournir (140) des données (79) sur une interface de données (70, 70a, 70b, 70c) d'un dispositif de connexion à fiches (64, 64a, 64b, 64c) selon l'une des revendications 1 à 5,
- transmettre (142) des données (79) fournies sur une seconde interface (68, 68a, 68b, 68c) d'un dispositif de connexion à fiches (64, 64a, 64b, 64c) selon l'une des revendications 1 à 5,
- recevoir (144) des données (79) transmises sur une seconde interface (68, 68a, 68b, 68c) d'un dispositif de connexion à fiches (64, 64a, 64b, 64c) supplémentaire selon l'une des revendications 1 à 5, et
- fournir (146) des données (79) reçues sur une interface de données (70, 70a, 70b, 70c) du dispositif de connexion à fiches (64, 64a, 64b, 64c) supplémentaire selon l'une des revendications 1 à 5.
